# DEMANDE DE BREVET EUROPEEN

(11) **EP 3 169 019 A1**
(43) Date de publication de la demande: **17.05.2017**
(21) Numéro de dépôt: 16198819.1
(22) Date de dépôt: 15.11.2016
(51) Int. Cl.: H04L 12/26, H04L 29/08

(54) **PROCEDE DE SURVEILLANCE D'ECHANGE DE DONNEES SUR UN RESEAU DE TYPE LIAISON H IMPLEMENTANT UNE TECHNOLOGIE TDMA**

(30) Priorité: 16.11.2015 FR 1502391
(71) Demandeur: BULL SAS, 78340 Les Clayes sous Bois (FR)
(72) Inventeur: ROMAN, Alexandre, 83400 Hyères (FR); CARTIER, Michel, 83000 Toulon (FR); FOISON, Dominique, 83330 Le Beausset (FR)
(74) Mandataire: Cabinet Camus Lebkiri

(57) **Abrégé**

L'invention se rapporte à un procédé (100) de surveillance d'échange de données sur un réseau de type liaison H implémentant une technologie de type TDMA comportant les étapes de :
- Transmettre (101) un agent de surveillance d'un serveur distant vers un serveur de communication,
- Installer (102) ledit agent de surveillance sur le serveur de communication,
- Lancer (103) ledit agent de surveillance sur le serveur de communication, ledit agent de surveillance implémentant une interface de réception et de transmission de données construite et agencée pour recevoir les données reçues par le serveur de communication et transmettre lesdites données reçues par ledit agent de surveillance au serveur distant,
- Transmettre (104) lesdites données reçues par ledit agent de surveillance au serveur distant, ladite transmission (104) desdites données reçues étant réalisée par ledit agent de surveillance.

## Description

### DOMAINE TECHNIQUE

La présente invention se rapporte, dans le domaine de l'informatique, à un procédé de surveillance d'échange de données sur un réseau de type liaison H implémentant une technologie à accès multiple à répartition dans le temps, plus connu sous l'acronyme TDMA (pour *Time Division Multiple Access* en anglais). La présente invention concerne également un système de surveillance d'échange de données sur un réseau de type liaison H implémentant une technologie TDMA. Cette invention est notamment applicable à des échanges de données entre des terminaux de type PR4G.

### ETAT DE LA TECHNIQUE ANTERIEUR

De façon connue, l'architecture d'un réseau de type liaison H est une architecture de type TDMA où le temps est découpé en entités indivisibles : créneaux (ou time slots (TS) en anglais). Les créneaux sont généralement attribués aux terminaux appartenant au réseau H. Chaque terminal peut émettre des données pendant des créneaux qui lui ont été préalablement attribués. En outre, lorsqu'un terminal n'émet pas, il est en mesure de recevoir des informations transmises par les terminaux appartenant au réseau H. Autrement dit, un réseau de type liaison H repose sur le principe de radiodiffusion (ou broadcast en anglais). Lorsqu'un terminal transmet une information, elle est mise à disposition de tous les autres participants. La connaissance des créneaux par chacun des terminaux nécessite qu'ils disposent d'un mécanisme de synchronisation précis. L'ensemble des terminaux synchronisés temporellement forme un réseau de type liaison H. La technologie TDMA garantit le temps d'accès et de parole à chacun des terminaux au cycle formé par un ensemble de 128 créneaux au maximum.

Par ailleurs, les terminaux PR4G sont en mesure de fournir différents services comme par exemple des services de phonie, de transmission de données, de messagerie de commandement, de messagerie temps réel, de messagerie sur réseau étendu ou encore de radio téléphone.

### EXPOSE DE L'INVENTION

Dans ce contexte, l'invention porte sur un procédé de surveillance d'échange de données sur un réseau de type liaison H implémentant une technologie à accès multiple à répartition dans le temps permettant de contrôler les données échangées entre divers terminaux, par exemple, sur un théâtre d'opération.

A cette fin, un aspect de l'invention porte sur un procédé de surveillance d'échange de données sur un réseau de type liaison H implémentant une technologie à accès multiple à répartition dans le temps, le procédé comportant les étapes de :
- Transmettre un agent de surveillance d'un serveur distant vers un serveur de communication,
- Installer ledit agent de surveillance sur le serveur de communication,
- Lancer ledit agent de surveillance sur le serveur de communication, ledit agent de surveillance implémentant une interface de réception et de transmission de données construite et agencée pour recevoir les données reçues par le serveur de communication et transmettre lesdites données reçues par ledit agent de surveillance au serveur distant,
- Réception par ledit agent de surveillance de données reçues par le serveur de communication,
- Transmettre lesdites données reçues par ledit agent de surveillance au serveur distant, ladite transmission desdites données reçues étant réalisée par ledit agent de surveillance.

Grâce au procédé de l'invention et notamment à l'agent de surveillance installé sur le serveur de communication d'un réseau de type liaison H implémentant une technologie de type TDMA, il est possible de visualiser à distance les informations échangées sur le réseau.

Le procédé selon l'invention peut également présenter une ou plusieurs des caractéristiques ci-après, considérées individuellement ou selon toutes les combinaisons techniquement réalisables.

Dans une mise en oeuvre non limitative, l'installation de l'agent de surveillance sur le serveur de communication est réalisée au moyen d'un conteneur du serveur de communication.

Dans une mise en oeuvre non limitative, la transmission de l'agent de surveillance vers le serveur de communication est réalisée via une liaison de type LAN.

Dans une mise en oeuvre non limitative, la transmission de données de l'agent de surveillance vers le serveur distant est réalisé selon le protocole de communication de type UDP.

Dans une mise en oeuvre non limitative, la transmission de données de l'agent de surveillance est réalisée en associant un numéro de créneau temporel aux données transmises sur ledit créneau temporel.

Dans une mise en oeuvre non limitative, le procédé comporte une étape supplémentaire d'interprétation et d'historisation des données transmises par l'agent de surveillance, ladite étape d'interprétation et d'historisation étant réalisé par un système d'interprétation et d'historisation du serveur distant.

Dans une mise en oeuvre non limitative, le procédé comporte une étape supplémentaire d'affichage d'un cycle TDMA en temps réel, ledit affichage étant réalisé par une interface homme-machine.

Dans une mise en oeuvre non limitative, les données sont des données issues de terminaux radio de type PR4G.

Un autre aspect de l'invention concerne un système de surveillance d'échange de données sur un réseau de type liaison H implémentant une technologie de type TDMA construit et agencé pour mettre en oeuvre un procédé de surveillance d'échange de données sur un réseau de type liaison H implémentant une technologie de type TDMA selon l'une au moins des mises en oeuvre du procédé conforme à celui de l'invention.

### BREVE DESCRIPTION DES FIGURES

D'autres caractéristiques et avantages de l'invention ressortiront clairement de la description qui en est donnée ci-dessous, à titre indicatif et nullement limitatif, en référence aux figures annexées, parmi lesquelles :
- La figure 1 illustre un synoptique des étapes d'un procédé de surveillance d'échange de données sur un réseau de type liaison H implémentant une technologie à accès multiple à répartition dans le temps conforme à celui de l'invention,
- La figure 2 illustre un exemple de réalisation d'un système de surveillance d'échange de données sur un réseau de type liaison H implémentant une technologie à accès multiple à répartition dans le temps conforme à celui de l'invention,
- La figure 3 illustre une interface homme-machine construite et agencée pour afficher des données échangées sur un réseau de type liaison H implémentant une technologie à accès multiple à répartition dans le temps conforme à celle de l'invention.

Pour des raisons de clarté, seuls les éléments utiles pour la compréhension de l'invention ont été représentés et ceci, sans respect de l'échelle et de manière schématique. En outre, les éléments similaires situés sur différentes figures comportent des références identiques.

### DESCRIPTION DETAILLEE D'AU MOINS UN MODE DE REALISATION DE L'INVENTION

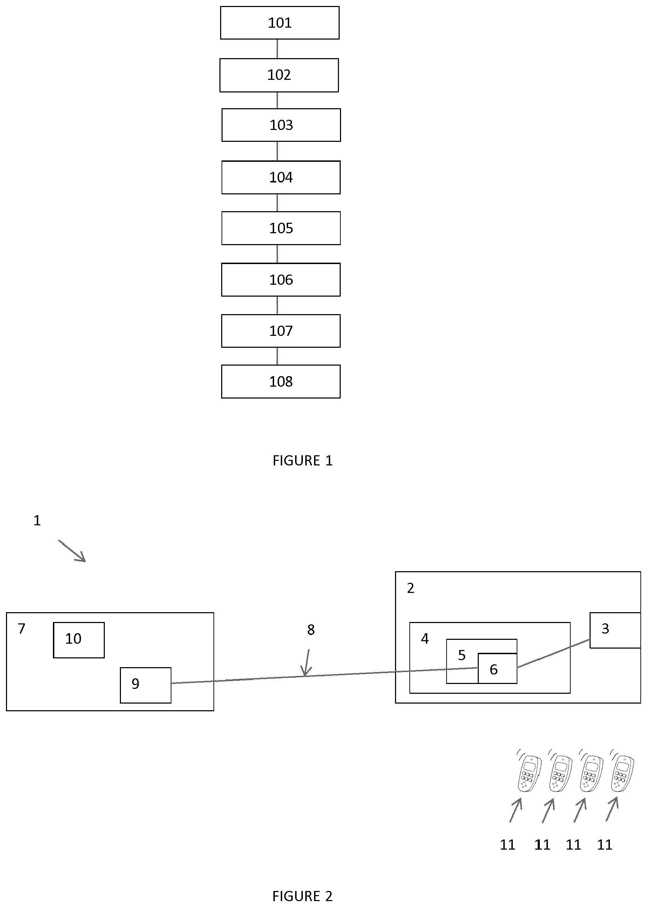

La figure 1 illustre un synoptique des étapes d'un procédé 100 de surveillance d'échange de données sur un réseau de type liaison H implémentant une technologie à accès multiple à répartition dans le temps conforme à celui de l'invention. La figure 2 illustre une réalisation d'un système 1 de surveillance d'échange de données sur un réseau de type liaison H implémentant une technologie à accès multiple à répartition dans le temps conforme à celui de l'invention, le système étant construit et agencé pour mettre en oeuvre le procédé 100.

Afin de faciliter la compréhension de l'invention, le procédé 100 est décrit par la suite à l'appui de la figure 1 et également de la figure 2.

Dans cette mise en oeuvre non limitative, le procédé 100 comporte une étape 101 de transmission d'un agent de surveillance 5 d'un serveur distant 7 vers un serveur de communication 2.

Dans une réalisation non limitative, l'agent de surveillance 5 du serveur distant 7 est transmis au serveur de communication 2 via une liaison de type LAN 8.

Le procédé 100 comporte en outre une étape 102 d'installation de l'agent de surveillance 5 sur le serveur de communication 2. Dans une mise en oeuvre non limitative, le serveur de communication 2 implémente un conteneur 4. Ce conteneur 4 est construit et agencé pour installer l'agent de surveillance 5 sur le serveur de communication 2. Ce conteneur 4 permet de restreindre les ressources utilisées par l'agent de surveillance 5, évite les erreurs lors de la réception de données en provenance des terminaux 11 et la transmission de données en direction du serveur distant 7. De façon générale, ce conteneur 4 contient, installe, et lance l'agent de surveillance 5 afin d'éviter de perturber le fonctionnement du serveur de communication 2.

Le procédé 100 comporte une étape de lancement 103 de l'agent de surveillance 5 sur le serveur de communication 7. Cette étape de lancement 103 est réalisée par le conteneur 4. L'agent de surveillance 5 implémente une interface de réception et de transmission de données 6 construite et agencée pour recevoir les données reçues par le serveur de communication 2 et transmettre les données reçues par l'agent de surveillance 5 au serveur distant 7. Par exemple, le conteneur 4 peut connaître l'interface 3 via laquelle le serveur de communication 2 reçoit les données des différents terminaux radio 11, par exemple de type PR4G. Le conteneur 4 connaît également l'interface de réception et de transmission des données 6 de l'agent de surveillance 5 de façon à faire transiter les données échangées par les terminaux 11 du réseau de type liaison H à l'agent de surveillance 5.

Le procédé 100 comporte également une étape supplémentaire 104 de transmission des données reçues par l'agent de surveillance 5 au serveur distant 7. Cette étape de transmission 104 est réalisée par l'agent de surveillance 5. En d'autres termes, les données des terminaux 11 sont transmises au serveur de communication 2 via l'interface 3, puis transmises à l'agent de surveillance 5 via l'interface 6. Ensuite, l'agent de surveillance transmet les données reçues via l'interface 6 au serveur distant 7. Cette transmission 104 est également réalisée via l'interface 6 de l'agent de surveillance 5.

Dans une mise en oeuvre non limitative, la transmission 104 de données de l'agent de surveillance 5 vers le serveur distant 7 est réalisée selon le protocole de communication de type UDP.

Le procédé 100 peut également comporter une étape supplémentaire 105 au cours de laquelle l'agent de surveillance 5 transmet des données en associant un numéro de créneau temporel (également connu sous les termes time slot en anglais) correspondant à la période de temps au cours de laquelle les données ont été transmises. Comme l'architecture d'un réseau de type liaison H est une architecture de type TDMA où le temps est découpé en entités indivisibles : créneaux. Les créneaux sont attribués aux terminaux 11 appartenant au réseau de type liaison H. Chaque terminal 11 peut émettre des données pendant des créneaux qui lui ont été préalablement attribués. Autrement dit, la technologie TDMA garantit le temps d'accès et de parole à chacun des terminaux 11 au cycle formé par un ensemble de 128 créneaux au maximum. Ainsi, en associant le créneau sur lequel les données ont été transmises aux données transmises, il est possible de connaître le terminal 11 ayant transmis ces données.

Dans une mise en oeuvre non limitative, le procédé 100 comporte une étape supplémentaire 106 d'interprétation et d'historisation des données transmises par l'agent de surveillance 5. Cette étape 106 d'interprétation et d'historisation étant réalisée par un système d'interprétation et d'historisation 9 du serveur distant 7. Da façon non limitative, cette étape d'interprétation et d'historisation 106 consiste notamment à classer les données reçues par le serveur distant en fonction du temps de transmission ou de réception et du terminal ayant transmis ou reçu ces données. Au cours de cette étape 106, les données peuvent également être classées en fonction du type de données, par exemple, des données issues des services de phonie, de transmission de données, de messagerie de commandement, de messagerie temps réel, de messagerie sur réseau étendu ou encore de radio téléphone.

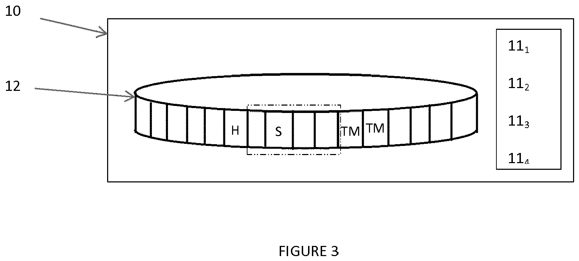

Dans une mise en oeuvre non limitative, le procédé 100 comporte une étape d'affichage d'un cycle TDMA en temps réel 107. L'affichage 107 est, par exemple, réalisé par une interface de type homme machine 10 située sur le serveur distant 7. Comme illustré sur la figure 3, l'affichage 107 identifie l'ensemble des terminaux 11₁, 11₂, 11₃, 11₄ appartenant au réseau de façon à ce que l'opérateur puisse sélectionner le terminal qu'il souhaite surveiller. Une fois sélectionné, l'affichage 107 peut être réalisé sous forme de buffer tournant 12 affichant un cycle composé de 38 créneaux, seulement 16 sont représentés. Si un créneau est utilisé pour recevoir des données alors une couleur apparaît sur le créneau correspondant, par exemple vert, et à l'inverse si un créneau est utilisé pour transmettre des données alors une autre couleur apparait sur le créneau correspondant, par exemple rouge. Ainsi, l'opérateur peut visualiser rapidement sur quel créneau des données ont été reçues ou transmises. En outre, le type de message peut être affiché sur le créneau. Par exemple, si un message complet de 6 octets au maximum a été transmis alors la lettre H s'affiche sur le créneau. Si un message a été segmenté car il dépassait 6 octets alors la lettre S s'affiche sur le créneau. Si un message était trop gros et qu'il a été séparé en 2 messages de 6 octets pour la transmission alors les lettres TM s'affiche sur le créneau.

En outre, come illustré il est possible de regrouper un certain nombre d'utilisateurs formant une boucle 13. Pour ce faire, l'opérateur défini via l'interface homme-machine 10 une boucle de terminaux 13 comportant un nombre déterminé de terminaux, par exemple 3. Dès lors que la boucle 13 est déterminée, l'interface homme machine 10 affiche une boucle 13 en entourant les terminaux de la boucle 13 de sorte à permettre à l'opérateur de surveiller les échanges de données effectuées entre les utilisateurs faisant partie de cette boucle 13.

Dans une application particulière du procédé selon l'invention, les données échangées au sein du réseau de type liaison H sont des données radio de terminaux PR4G.

De manière générale, le serveur de communication 2 et le serveur distant 7 peuvent comporter un ou plusieurs microprocesseurs construit(s) et adapté(s) pour exécuter des séquences d'instructions permettant une mise en oeuvre des étapes 101, 102, 103, 104, 105, 106, 107, 108 du procédé 100 conforme à l'invention.

Comme illustré sur la figure 2, l'invention porte également sur un système 1 de surveillance d'échange de données sur un réseau de type liaison H implémentant une technologie à accès multiple à répartition dans le temps conforme à celui de l'invention.

Dans cette mise en oeuvre non limitative, le système 1 comporte un serveur de communication 2 implémentant une interface de réception de données 3 échangées entre des terminaux 4 du réseau de type liaison H. Le serveur de communication 2 répertorie les échanges de données se produisant entre les terminaux 11 du réseau.

Le serveur de communication 2 comporte également un conteneur 4 comportant un agent de surveillance 5 présentant une interface 6 de réception et de transmission des données. Plus particulièrement, cette interface 6 est construite et agencée pour recevoir les données reçues via l'interface de réception 3 du serveur de communication 2 et transmettre les données reçues à un serveur distant 7.

Le système 1 comporte un serveur distant 7 connecté au serveur de communication 2 via une liaison de type LAN 8. Ainsi, les données transmises par l'interface 6 de l'agent de surveillance 5 sont reçues par le serveur distant 7 via la connexion de type LAN 8.

Le serveur distant 7 comporte un système d'interprétation et d'historisation 9 des données transmises par l'agent de surveillance 5.

Le serveur distant 7 comporte en outre une interface homme-machine 10 construite et agencée pour afficher un cycle complet TDMA en temps réel. Autrement-dit, les données échangées sur le serveur de communication 2 durant un cycle peuvent être visualisée par un opérateur au moyen de cette interface homme-machine 10.

## Revendications

1. Procédé (100) de surveillance d'échange de données sur un réseau de type liaison H implémentant une technologie de type TDMA comportant les étapes de :
- Transmettre (101) un agent de surveillance (5) d'un serveur distant (7) vers un serveur de communication (2),
- Installer (102) ledit agent de surveillance (5) sur le serveur de communication (2),
- Lancer (103) ledit agent de surveillance (5) sur le serveur de communication (2), ledit agent de surveillance (5) implémentant une interface de réception et de transmission de données (6) construite et agencée pour recevoir les données reçues par le serveur de communication (2) et transmettre lesdites données reçues par ledit agent de surveillance (5) au serveur distant (7),
- Transmettre (104) lesdites données reçues par ledit agent de surveillance (5) au serveur distant (7), ladite transmission (104) desdites données reçues étant réalisée par ledit agent de surveillance (5).

2. Procédé (100) de surveillance d'échange de données sur un réseau de type liaison H implémentant une technologie de type TDMA selon la revendication 1, **caractérisé en ce que** l'installation (102) de l'agent de surveillance (5) sur le serveur de communication (2) est réalisée au moyen d'un conteneur (4) du serveur de communication (2).

3. Procédé (100) de surveillance d'échange de données sur un réseau de type liaison H implémentant une technologie de type TDMA selon l'une quelconque des revendications précédentes, **caractérisé en ce que** la transmission (101) de l'agent de surveillance (5) vers le serveur de communication (2) est réalisée via une liaison (8) de type LAN.

4. Procédé (100) de surveillance d'échange de données sur un réseau de type liaison H implémentant une technologie de type TDMA selon l'une quelconque des revendications précédentes, **caractérisé en ce que** la transmission (104) de données de l'agent de surveillance (5) vers le serveur distant (7) est réalisée selon le protocole de communication UDP.

5. Procédé (100) de surveillance d'échange de données sur un réseau de type liaison H implémentant une technologie de type TDMA selon l'une quelconque des revendications précédentes, **caractérisé en ce que** la transmission (104) de données de l'agent de surveillance (5) vers le serveur distant (7) est réalisée en associant un numéro de créneau temporel aux données transmises sur ledit créneau temporel.

6. Procédé (100) de surveillance d'échange de données sur un réseau de type liaison H implémentant une technologie de type TDMA selon l'une quelconque des revendications précédentes, **caractérisé en ce qu'**il comporte une étape supplémentaire (105) d'interprétation et d'historisation des données transmises par l'agent de surveillance (5), ladite étape (105) d'interprétation et d'historisation étant réalisé par un système d'interprétation et d'historisation (9) du serveur distant (7).

7. Procédé (100) de surveillance d'échange de données sur un réseau de type liaison H implémentant une technologie de type TDMA selon l'une quelconque des revendications précédentes, **caractérisé en ce qu'**il comporte une étape supplémentaire d'affichage d'un cycle TDMA en temps réel (106), ledit affichage (106) étant réalisé par une interface homme-machine (10).

8. Procédé (100) de surveillance d'échange de données sur un réseau de type liaison H implémentant une technologie de type TDMA selon l'une quelconque des revendications précédentes, **caractérisé en ce que** les données sont des données issue de terminaux radio de type PR4G.

9. Système (1) de surveillance d'échange de données sur un réseau de type liaison H implémentant une technologie de type TDMA construit et agencé pour mettre en oeuvre un procédé (100) de surveillance d'échange de données sur un réseau de type liaison H implémentant une technologie de type TDMA selon l'une quelconque des revendications précédentes.
